# EUROPEAN PATENT APPLICATION

(11) **EP 4 482 213 A1**
(43) Date of publication of application: **25.12.2024**
(21) Application number: 23755663.4
(22) Date of filing: 19.01.2023
(51) Int. Cl.: H04W 36/14, H04W 72/04

(54) **METHOD FOR REALIZING DYNAMIC FREQUENCY SELECTION, AND DEVICE**

(30) Priority: 18.02.2022 CN 202210152704
(71) Applicant: TP-Link Corporation Limited, Kowlon Hong Kong (HK)
(72) Inventor: WANG, Yuqi, Shenzhen, Guangdong 518000 (CN)
(74) Representative: V.O.
(86) International application number: PCT/CN2023/073200
(87) International publication number: WO 2023/155659

(57) **Abstract**

The disclosure provides a method and apparatus for implementing dynamic frequency selection. The method is applied to a wireless networking system, where the wireless networking system includes a master network device, and the method includes: controlling the master network device to work at a first bandwidth; monitoring in real time whether a target channel is occupied by a first non-target signal; and controlling, under a condition that the target channel is not occupied by the first non-target signal, the master network device to work at a second bandwidth including the target channel. The first bandwidth is upgraded to the second bandwidth under the condition that the target channel is not occupied by the first non-target signal. The bandwidth is upgraded without Channel Availability Check (CAC) silence. A high wireless connection rate is provided while user experience is guaranteed.

## Description

### Cross-Reference to Related Application

The disclosure claims the priority to Chinese Patent Application No. 2022101527045 filed with the Chinese Patent Office on February 18, 2022 and entitled "Method and Apparatus for Implementing Dynamic Frequency Selection", which is incorporated herein in its entirety by reference.

### Technical Field

The disclosure relates to the field of wireless networking, in particular to a method and apparatus for implementing dynamic frequency selection, a computer-readable storage medium, a processor, and a networking system.

### Background

As wireless devices get popularized, the channel interference is intensified and demands for wireless bandwidth increase, current non-Dynamic Frequency Selection (DFS) channels no longer satisfy dual demands for the wireless transmission quality and the wireless speed. As a result, it becomes an increasingly pressing issue to satisfy a demand for wireless transmission by using the DFS channels.

Channel Availability Check (CAC) is indispensable for using the DFS channels at present. CAC silence is indispensable in a process of upgrading a channel from a 80M bandwidth to a 160M bandwidth. That is, waiting for a period of time, for example, 1 min, is required in the process of upgrading the channel from a low bandwidth to a high bandwidth. However, poor user experience is caused since the CAC silence is likely to lead to wireless disconnection.

### Summary

A main objective of the disclosure is to provide a method and apparatus for implementing dynamic frequency selection, a computer-readable storage medium, a processor, and a networking system, so as to solve the problem that Channel Availability Check (CAC) silence is needed during the Dynamic Frequency Selection (DFS).

In order to achieve the objective, according to one aspect of the disclosure, a method for implementing dynamic frequency selection is provided. The method is applied to a wireless networking system, where the wireless networking system includes a master network device, and the method includes: controlling the master network device to work at a first bandwidth; monitoring in real time whether a target channel is occupied by a first non-target signal; and controlling, under a condition that the target channel is not occupied by the first non-target signal, the master network device to work at a second bandwidth including the target channel, where the second bandwidth is higher than first bandwidth.

As at least one alternative embodiment, the wireless networking system further includes a slave network device, and after the controlling the master network device to work at a second bandwidth including the target channel, the method further includes: generating first prompt information, where the first prompt information is configured to give a prompt that the master network device has already worked at the second bandwidth; and controlling, based on the first prompt information, the slave network device to work at the second bandwidth including the target channel.

As at least one alternative embodiment, in a process during which the master network device works at the second bandwidth, the method further includes: monitoring in real time whether the target channel is occupied by a second non-target signal; and controlling a working bandwidth of the master network device to change to the first bandwidth, or, controlling the master network device to work at a non-target channel under the condition that the target channel is occupied by the second non-target signal.

As at least one alternative embodiment, the system further includes a slave network device, and after the controlling a working bandwidth of the master network device to change to the first bandwidth under the condition that the target channel is occupied by the second non-target signal, the method further includes: generating second prompt information, where the second prompt information is configured to give a prompt that the master network device has already worked at the first bandwidth; and controlling a working bandwidth of the slave network device to change to the first bandwidth based on the second prompt information.

As at least one alternative embodiment, the method further includes: storing the target channel in an occupied channel registration list under the condition that the target channel is occupied by the second non-target signal; and searching the occupied channel registration list after a predetermined period of time, and re-determining whether the target channel is occupied.

As at least one alternative embodiment, the first non-target signal is a radar signal.

As at least one alternative embodiment, the radar signal includes at least one of the following: a military radar signal and a weather radar signal.

According to another aspect of the disclosure, an apparatus for implementing dynamic frequency selection is provided. The apparatus is applied to a wireless networking system, where the wireless networking system includes a master network device, and the apparatus includes: a First controlling unit, configured to control the master network device to work at a first bandwidth; a monitoring unit, configured to monitor in real time whether a target channel is occupied by a first non-target signal; and a Second controlling unit, configured to control, under the condition that the target channel is not occupied by the first non-target signal, the master network device to work at a second bandwidth including the target channel, where the second bandwidth is higher than the first bandwidth.

According to another aspect of the disclosure, a computer-readable storage medium is provided. The computer-readable storage medium includes a stored program, where the program controls a device where the computer-readable storage medium is located to execute any said method when running.

According to another aspect of the disclosure, a processor is provided. The processor is configured to run a program, where the program executes any said method when running.

According to another aspect of the disclosure, a networking system is provided. The networking device includes a master network device, a slave network device and a controller, where the controller is configured to execute any said method.

According to the technical solution of the disclosure, at first, the master network device is controlled to work at the first bandwidth. Then, whether the target channel is occupied by the first non-target signal is monitored in real time, and under the condition that the target channel is not occupied by the first non-target signal, the master network device is controlled to work at the second bandwidth including the target channel. That is, the first bandwidth is upgraded to the second bandwidth under the condition that the target channel is not occupied by the first non-target signal. The bandwidth is upgraded without CAC silence. A high wireless connection rate is provided while user experience is guaranteed.

### Brief Description of the Drawings

The accompanying drawings of the description are used for further understanding of the disclosure as a constituent part of the disclosure. Illustrative examples of the disclosure and their explanation are used for explaining the disclosure, and do not constitute improper limitation to the disclosure. In the accompanying drawings:
Fig. 1 shows a flowchart of a method for implementing dynamic frequency selection according to an example of the disclosure; and
Fig. 2 shows a schematic diagram of an apparatus for implementing dynamic frequency selection according to an example of the disclosure.

### Detailed Description of the Embodiments

It should be noted that examples in the disclosure and features in the examples can be combined mutually if there is no conflict. The disclosure will be described in detail below with reference to accompanying drawings and in conjunction with the examples.

In order to make a person of ordinary skill in the art better understand solutions of the disclosure, technical solutions in examples of the disclosure will be clearly and completely described below with reference to the accompanying drawings in the examples of the disclosure. Apparently, the described examples are merely some examples rather than all examples of the disclosure. All other examples derived by a person of ordinary skill in the art from the examples of the disclosure without creative efforts should fall within the protection scope of the disclosure.

It should be noted that the terms "first" , "second", etc. in the description, claims and the accompanying drawings of the disclosure are used to distinguish similar objects, but are not necessarily used to describe a specific sequence or a precedence order. It should be understood that the data used in this way are interchangeable under appropriate circumstances for the purposes of the examples of the disclosure described herein. In addition, terms "comprise", "include", "provide with", and their any variation are intended to cover non-exclusive inclusions. For example, processes, methods, systems, products, or devices that include a series of steps or units are not necessarily limited to those steps or units clearly listed, but can include other steps or units not explicitly listed or inherent to these processes, methods, products, or devices.

It should be understood that when an element (such as a layer, a film, an area, or a substrate) is described as being "on" another element, the element can be on the another element directly, or through an intermediate element. Moreover, in the description and claims, when an element is described as "connected" to another element, the element can be "directly connected" to another element or "connected" to another element through a third element.

For the convenience of description, some nouns or terms related to the examples of the disclosure are described below:
Dynamic Frequency Selection (DFS) refers to a method and system for dynamically selecting a communication channel between an Access Point (AP) and a plurality of Mobile Terminals (MT) in a Wireless Local Area Network (WLAN).

Channel Availability Check (CAC) refers to checking whether there is a radar signal or a jamming signal on a target channel and whether the target channel is able to be used during dynamic frequency selection.

As introduced in the background, in the related art, it is necessary to wait in a process of upgrading a channel from a low bandwidth to a high bandwidth. That is, CAC silence is needed in the DFS process. In order to solve the problem that CAC silence is needed in the DFS process, examples of the disclosure provide a method and apparatus for implementing dynamic frequency selection, a computer-readable storage medium, a processor, and a networking system.

According to the example of the disclosure, a method for implementing dynamic frequency selection is provided.

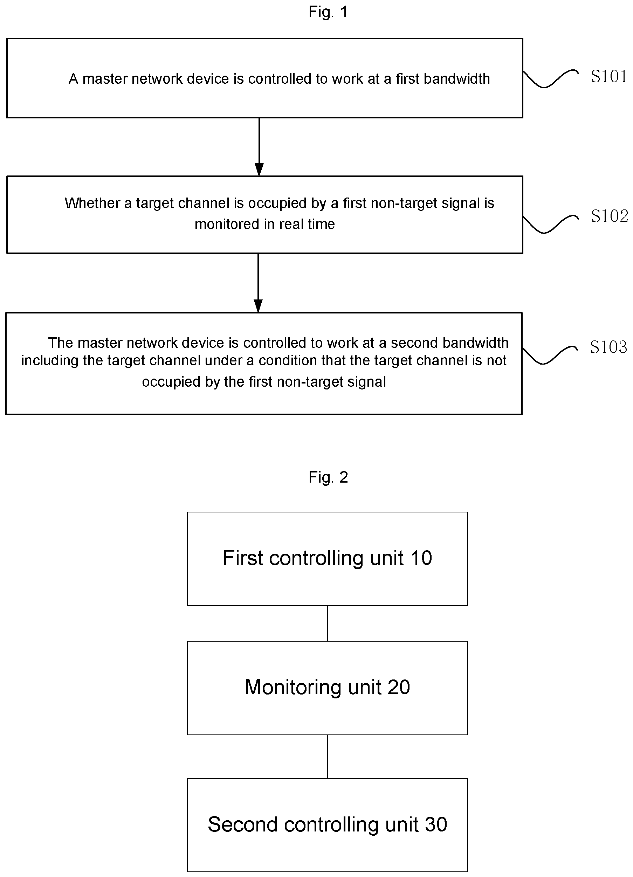

Fig. 1 is a flowchart of a method for implementing dynamic frequency selection according to an example of the disclosure. The method is applied to a wireless networking system, and the wireless networking system includes a master network device. As shown in Fig. 1, the method includes:
S101, A master network device is controlled to work at a first bandwidth.
S102, Whether a target channel is occupied by a first non-target signal is monitored in real time.

As at least one alternative embodiment, the first non-target signal may be a radar signal.

As at least one alternative embodiment, the radar signal may include at least one of the following: a military radar signal and a weather radar signal.

S103, Under the condition that the target channel is not occupied by the first non-target signal, the master network device is controlled to work at a second bandwidth including the target channel.

As at least one alternative embodiment, the first bandwidth may be 80M and the second bandwidth may be 160M.

As at least one alternative embodiment, 5GHz frequency is used in 802.11a, but in areas certified by European Telecommunications Standards Institute (ETSI) and Federal Communications Commission (FCC), 5GHz frequency bands are also used for some military radars and weather radars. In order to prevent the radar signal from being interfered by the wireless transmission, wireless products need to detect the radar channel at first when using a DFS radar channel, and actively select another frequency band when detecting the radar signal.

In the solution, at first, the master network device is controlled to work at the first bandwidth. Then, whether the target channel is occupied by the first non-target signal is monitored in real time under the condition that the master network device works at the first bandwidth, and under the condition that the target channel is not occupied by the first non-target signal, the master network device is controlled to work at the second bandwidth including the target channel. That is, the first bandwidth is upgraded to the second bandwidth under the condition that the target channel is not occupied by the first non-target signal. The bandwidth is upgraded without CAC silence. A high wireless connection rate is provided while user experience is guaranteed.

It should be noted that steps shown in the flowchart of the accompanying drawings may be executed, for example, in a computer system for a set of computer-executable instructions, and although a logical sequence is shown in the flowchart, in some cases, the steps shown or described may be executed in a sequence different from that stated herein.

In some examples of the disclosure, the wireless working system further includes a slave network device. After the step that the master network device is controlled to work at a second bandwidth including the target channel, the method further includes: first prompt information is generated, where the first prompt information is configured to give a prompt that the master network device has already worked at the second bandwidth; and based on the first prompt information, the slave network device is controlled to work at the second bandwidth including the target channel. That is, the slave network device follows the master network device, and under the condition that the master network device works at the second bandwidth, the first prompt information may be sent to give a prompt to enable the slave network device also to work at the second bandwidth.

As at least one alternative embodiment, the first prompt information may be a channel switch announcement (CSA) message.

As at least one alternative embodiment, the master network device may be a network device in a role of a Fat Access Point (FAP). The master network device is turned on and works at 80M at first, so as to quickly associate with the slave network devices and complete networking. After rCAC scanning is completed, upgrading is quickly implemented to 160M, during which CAC silence is unnecessary. The slave network device is a network device in a role of a REpeater (RE). Further, rCAC is not turned on, and the RE is turned on and works at 80M. DFS scanning is not implemented and automatic bandwidth upgrading with zero wait is implemented, the RE follows a channel and a bandwidth of the front-end FAP in the process of scanning and associating the FAP.

In some examples of the disclosure, in a process during which the master network device works at the second bandwidth, the method further includes: whether the target channel is occupied by a second non-target signal is monitored in real time; and a working bandwidth of the master network device is controlled to change to the first bandwidth, and alternatively, the master network device is controlled to work at a non-target channel under the condition that the target channel is occupied by the second non-target signal. That is, in the process during which the master network device works at the second bandwidth, whether the target channel is occupied by the second non-target signal is also needed to be monitored in real time. The working bandwidth of the master network device is changed to the first bandwidth, and alternatively, the master network device is controlled to work at the non-target channel under the condition that the target channel is occupied by the second non-target signal. Since the second non-target signal does not occupy the first bandwidth, the working bandwidth of the master network device may be changed to the first bandwidth. It is clear that the master network device may be controlled to work in the non-target channel, so as to ensure normal working of the master network device.

In some examples of the disclosure, the wireless networking system further includes a slave network device. After the step that a working bandwidth of the master network device is controlled to change to the first bandwidth under the condition that the target channel is occupied by the second non-target signal, the method further includes: second prompt information is generated, where the second prompt information is configured to give a prompt that the master network device has already worked at the first bandwidth; and a working bandwidth of the slave network device is controlled to change to the first bandwidth based on the second prompt information. That is, the slave network device follows the master network device, and after the master network device works at the first bandwidth, a working bandwidth of the slave network device is controlled to change to the first bandwidth. Thus, synchronization of the master network device with the slave network device is guaranteed.

As at least one alternative embodiment, the second prompt information is a Channel Switch Announcement (CSA) message. FAP actively sends out the CSA message for notification of an RE the channel change. Thus, it is guaranteed that the RE can follow a front-end channel again and quickly associate with the front end. A scan channel of rCAC is preconfigured through rCAC_freq parameters. Under the condition that the network device is turned on at 80M, a state machine of rCAC may enter a state of DFS_AGILE_SM_EV_AGILE_DONE after rCAC completes the CAC scanning for 1 min. In this case, a WLAN_EV_RCAC_DONE event is registered. For this event, a corresponding processing function is added, and then the bandwidth is upgraded to 160M while keeping a current control channel unchanged.

In some examples, the method further includes: the target channel is stored in an occupied channel registration list under the condition that the target channel is occupied by the second non-target signal; and the occupied channel registration list is searched after a predetermined period of time, and whether the target channel is occupied is re-determined. For example, 30 min may be selected as the predetermined period of time, and the target channel is not able to be used again within 30 min when the target channel is occupied by the second non-target signal.

After being hit by the radar, the DFS channel may be added to an occupied channel registration list (NOLList). For each channel in NOLList, an NOLexpire timer for 30 min may be turned on. When the NOLexpire timer expires, a WLAN_EV_NOL_FINISHED event may be triggered, indicating that a radar silence period of the DFS channel expires. Thus, a state machine of rCAC is directly modified to a DFS_AGILE_SM_EV_AGILE_START state, and waiting is implemented until the rCAC scan for 1 min is completed. If no radar signal is detected in this case, the state machine of rCAC may enter a DFS_AGILE_SM_EV_AGILE_DONE state, and then a WLAN_EV_RCAC_DONE event processing logic is repeated.

The example of the disclosure further provides an apparatus for implementing dynamic frequency selection. It should be noted that the apparatus for implementing dynamic frequency selection according to the example of the disclosure may be used to implement the method for implementing dynamic frequency selection according to the example of the disclosure. The apparatus for implementing dynamic frequency selection according to the example of the disclosure is described below.

Fig. 2 is a schematic diagram of an apparatus for implementing dynamic frequency selection according to an example of the disclosure. The apparatus is applied to a wireless networking system, and the system includes a master network device. As shown in Fig. 2, the apparatus includes:
a First controlling unit 10, configured to control the master network device to work at a first bandwidth;
a monitoring unit 20, configured to monitor in real time whether a target channel is occupied by a first non-target signal;
as an example, the first non-target signal may be a radar signal; and
as an example, the radar signal may include at least one of the following: a military radar signal and a weather radar signal; and
a Second controlling unit 30, configured to control, under the condition that the target channel is not occupied by the first non-target signal, the master network device to work at a second bandwidth including the target channel, where the second bandwidth is higher than the first bandwidth.

In the solution, the First controlling unit controls the master network device to work at the first bandwidth. The monitoring unit monitors in real time whether the target channel is occupied by the first non-target signal under the condition that the master network device works at the first bandwidth, and the Second controlling unit controls, under the condition that the target channel is not occupied by the first non-target signal, the master network device to work at the second bandwidth including the target channel. That is, the first bandwidth is upgraded to the second bandwidth under the condition that the target channel is not occupied by the first non-target signal. The bandwidth is upgraded without CAC silence.

In some examples of the disclosure, the wireless networking system further includes a slave network device, and the apparatus further includes a first generation unit and a third control unit. The first generation unit is configured to generate first prompt information after controlling the master network device to work at the second bandwidth including the target channel. The first prompt information is configured to give a prompt that the master network device has already worked at the second bandwidth. The third control unit is configured to control, based on the first prompt information, the slave network device to work at the second bandwidth including the target channel. That is, the slave network device follows the master network device, and under the condition that the master network device works at the second bandwidth, the first prompt information may be sent to give a prompt to enable the slave network device also to work at the second bandwidth.

In some examples of the disclosure, the apparatus further includes a monitoring unit and a fourth control unit. The monitoring unit is configured to monitor in real time whether the target channel is occupied by a second non-target signal in a process during which the master network device works at the second bandwidth. The fourth control unit is configured to control a working bandwidth of the master network device to change to the first bandwidth, and alternatively control the master network device to work at a non-target channel under the condition that the target channel is occupied by the second non-target signal. That is, in the process during which the master network device works at the second bandwidth, whether the target channel is occupied by the second non-target signal is also needed to be monitored in real time. The working bandwidth of the master network device is changed to the first bandwidth, and alternatively, the master network device is controlled to work at the non-target channel under the condition that the target channel is occupied by the second non-target signal. Since the second non-target signal does not occupy the first bandwidth, the working bandwidth of the master network device may be changed to the first bandwidth. It is clear that the master network device may be controlled to work in the non-target channel, so as to ensure normal working of the master network device.

In some examples of the disclosure, the system further includes a slave network device, and the apparatus further includes a second generation unit and a fifth control unit. The second generation unit is configured to generate second prompt information after controlling a working bandwidth of the master network device to change to the first bandwidth under the condition that the target channel is occupied by the second non-target signal. The second prompt information is configured to give a prompt that the master network device has already worked at the first bandwidth. The fifth control unit is configured to control a working bandwidth of the slave network device to change to the first bandwidth based on the second prompt information. That is, the slave network device follows the master network device, and after the master network device works at the first bandwidth, a working bandwidth of the slave network device is controlled to change to the first bandwidth. Thus, synchronization of the master network device with the slave network device is guaranteed.

In some examples of the disclosure, the apparatus further includes a storage unit and a determination unit. The storage unit is configured to store the target channel in an occupied channel registration list under the condition that the target channel is occupied by the second non-target signal. The determination unit is configured to search the occupied channel registration list after a predetermined period of time, and re-determine whether the target channel is occupied. For example, 30 min may be selected as the predetermined period of time, and the target channel is not able to be used again within 30 min when the target channel is occupied by the second non-target signal.

The apparatus for implementing dynamic frequency selection includes a processor and a memory. The First controlling unit, the monitoring unit, the Second controlling unit, etc. are stored in the memory as program units, and the processor executes the program unit stored in the memory, so as to implement corresponding functions.

The processor contains a core, and the core calls a corresponding program unit in the memory. One or more cores may be set, and the CAC silence may be avoided by adjusting parameters of the cores.

The memory may include a non-permanent memory, a random access memory (RAM) and/or a nonvolatile memory, etc. in the computer-readable medium, such as a read-only memory (ROM) or a flash RAM, and the memory includes at least one storage memory chip.

The example of the disclosure provides a computer-readable storage medium is provided. The computer-readable storage medium includes a stored program, where the program controls a device where the computer-readable storage medium is located to execute the method for implementing dynamic frequency selection.

The example of the disclosure provides a processor. The processor is configured to run a program, where the program executes the method for implementing dynamic frequency selection when running.

The example of the disclosure provides a device. The device includes a processor, a memory, and a program that is stored on the memory and operable on the processor, where when executing the program, the processor implements at least following actions.

S101, A master network device is controlled to work at a first bandwidth.

S102, Whether a target channel is occupied by a first non-target signal is monitored in real time.

S103, Under the condition that the target channel is not occupied by the first non-target signal, the master network device is controlled to work at a second bandwidth including the target channel, wherein the second bandwidth is higher than the first bandwidth.

The device herein may be a server, a Personal Computer (PC), a Portable Android Device (PAD), a mobile phone, a router, etc.

The example of the disclosure provides a networking system. The networking system includes a master network device, a slave network device and a controller. The controller is configured to execute any said method.

The disclosure further provides a computer program product. When executed on a data processing device, the computer program product is applied to execute a program that is initialized to include at least following actions.

S101, A master network device is controlled to work at a first bandwidth.

S102, Whether a target channel is occupied by a first non-target signal is monitored in real time.

S103, Under the condition that the target channel is not occupied by the first non-target signal, the master network device is controlled to work at a second bandwidth including the target channel, wherein the second bandwidth is higher than the first bandwidth.

A person of ordinary skill in the art should understand that the example of the disclosure may be provided in the form of a method, a system, or a computer program product. Thus, the disclosure may take the form of a full hardware example, a full software example, or an example combining software and hardware. Further, the disclosure may take the form of a computer program product implemented on one or more computer-usable storage media (including but not limited to a disk memory, a CD-ROM, an optical memory, etc.) including computer-usable program codes.

The disclosure is described with reference to the flowcharts and/or block diagrams of the method, the device (system), and the computer program product according to the example of the disclosure. It should be understood that computer program instructions may implement each flow and/or each block in the flowcharts and/or the block diagrams and a combination of a flow and/or a block in the flowcharts and/or the block diagrams. These computer program instructions may be provided for a processor of a general-purpose computer, a special-purpose computer, an embedded processing machine, or other programmable data processing device to produce a machine, such that instructions executed by the processor of the computer or other programmable data processing device produce an apparatus configured to implement a function specified in one or more flows of the flowchart and/or one or more blocks of the block diagram.

These computer program instructions may also be stored in a computer-readable memory that may guide a computer or other programmable data processing device to work in a specific manner, such that the instructions stored in the computer-readable memory produce an article of manufacture including an instruction apparatus, and the instruction apparatus implements the function specified in one or more flows of the flowchart and/or one or more blocks in the block diagram.

These computer program instructions may also be loaded onto the computer or other programmable data processing device, such that a series of operation steps are executed on the computer or other programmable device to generate computer-implemented processing, and instructions executed on the computer or other programmable device provide steps for implementing the function specified in the one or more flows of the flowchart and/or one or more blocks in the block diagram.

In a typical configuration, a computer device includes one or more central processing units (CPUs), an input/output interface, a network interface, and a memory.

The memory may include a non-permanent memory, a random access memory (RAM) and/or a nonvolatile memory, etc. in the computer-readable medium, such as a read-only memory (ROM) or a flash RAM. The memory is an example of the computer-readable medium.

The computer-readable medium includes permanent and non-permanent, removable and non-removable media, and may store information by any method or technology. Information may be a computer-readable instruction, a data structure, a program module or other data. Examples of a computer storage medium include, but are not limited to, a phase-change random access memory (PRAM), a static random access memory (SRAM), a dynamic random access memory (DRAM), other types of random access memories (RAMs), a read-only memory (ROM), an electrically erasable programmable read-only memory (EEPROM), a flash memory or other memory technologies, a compact disc read-only memory (CD-ROM), a digital versatile disc (DVD) or other optical storages, a cassette tape, a tape or disk storage or other magnetic storage devices, or any other non-transmission media that may be used to store information accessible by a computing device. According to the definitions herein, the computer-readable medium does not include transitory media, such as modulated data signals and carrier waves.

It should also be noted that the terms "comprise", "include" and their other variations intend to cover non-exclusive inclusion, such that a process, a method, a product or a device including a series of elements not only includes those elements, but includes other elements not listed clearly, or further includes elements inherent to the process, method, product or device. In the case of no more limitation, an element limited by the phrase "comprise a..."or "include a..." does not exclude another same element existing in a process, method, product or device including the element.

From the above description, it can be seen that the example of the disclosure achieves the following technical effects:
1). According to the method for implementing dynamic frequency selection of the disclosure, at first, the master network device is controlled to work at the first bandwidth. Then, whether the target channel is occupied by the first non-target signal is monitored in real time, and under the condition that the target channel is not occupied by the first non-target signal, the master network device is controlled to work at the second bandwidth including the target channel. That is, the first bandwidth is upgraded to the second bandwidth under the condition that the target channel is not occupied by the first non-target signal. The bandwidth is upgraded without CAC silence. A high wireless connection rate is provided while user experience is guaranteed.
2). According to the apparatus for implementing dynamic frequency selection, the First controlling unit controls the master network device to work at the first bandwidth. The monitoring unit monitors in real time whether the target channel is occupied by the first non-target signal under the condition that the master network device works at the first bandwidth, and the Second controlling unit controls, under the condition that the target channel is not occupied by the first non-target signal, the master network device to work at the second bandwidth including the target channel. That is, the first bandwidth is upgraded to the second bandwidth under the condition that the target channel is not occupied by the first non-target signal. The bandwidth is upgraded without CAC silence.

The above examples are merely preferred examples of the disclosure and are not intended to limit the disclosure, and for a person of ordinary skill in the art, various modifications and changes can be made to the disclosure. Any modification, equivalent substitution and improvement, etc. made within the spirit and principles of the disclosure should fall within the protection scope of the disclosure.

## Claims

1. A method for implementing dynamic frequency selection, applied to a wireless networking system, wherein the wireless networking system comprises a master network device, and the method comprises:
controlling the master network device to work at a first bandwidth;
monitoring in real time whether a target channel is occupied by a first non-target signal; and
controlling, under a condition that the target channel is not occupied by the first non-target signal, the master network device to work at a second bandwidth including the target channel.

2. The method as claimed in claim 1, wherein the wireless networking system further comprises a slave network device, and after the controlling the master network device to work at a second bandwidth including the target channel, the method further comprises:
generating first prompt information, wherein the first prompt information is configured to give a prompt that the master network device has already worked at the second bandwidth; and
controlling, based on the first prompt information, the slave network device to work at the second bandwidth including the target channel.

3. The method as claimed in claim 1, wherein in a process during which the master network device works at the second bandwidth, the method further comprises:
monitoring in real time whether the target channel is occupied by a second non-target signal; and
controlling a working bandwidth of the master network device to change to the first bandwidth, or, controlling the master network device to work in a non-target channel under a condition that the target channel is occupied by the second non-target signal.

4. The method as claimed in claim 3, wherein the wireless networking system further comprises a slave network device, and after the controlling a working bandwidth of the master network device to change to the first bandwidth under the condition that the target channel is occupied by the second non-target signal, the method further comprises:
generating second prompt information, wherein the second prompt information is configured to give a prompt that the master network device has already worked at the first bandwidth; and
controlling, based on the second prompt information, a working bandwidth of the slave network device to change to the first bandwidth.

5. The method as claimed in claim 3, further comprising:
storing the target channel in an occupied channel registration list under a condition that the target channel is occupied by the second non-target signal; and
searching the occupied channel registration list after a predetermined period of time, and re-determining whether the target channel is occupied.

6. The method according to any one of claims 1-5, wherein the first non-target signal is a radar signal.

7. The method as claimed in claim 6, wherein the radar signal comprises at least one of the following:
a military radar signal and a weather radar signal.

8. An apparatus for implementing dynamic frequency selection, applied to a wireless networking system, wherein the wireless networking system comprises a master network device, and the apparatus comprises:
a First controlling unit, configured to control the master network device to work at a first bandwidth;
a monitoring unit, configured to monitor in real time whether a target channel is occupied by a first non-target signal; and
a Second controlling unit, configured to control, under a condition that the target channel is not occupied by the first non-target signal, the master network device to work at a second bandwidth including the target channel, wherein the second bandwidth is higher than the first bandwidth.

9. A computer-readable storage medium, comprising a stored program, wherein the program controls a device where the computer-readable storage medium is located to execute the method as claimed in any one of claims 1-7 when running.

10. A processor, configured to run a program, wherein the program executes the method as claimed in any one of claims 1-7 when running.

11. A networking system, comprising a master network device, a slave network device and a controller, wherein the controller is configured to execute the method as claimed in any one of claims 1-7.
